# EUROPEAN PATENT SPECIFICATION

(11) **EP 0 508 587 B1**
(45) Date of publication and mention of the grant of the patent: **31.08.1994**
(21) Application number: 92301843.6
(22) Date of filing: 04.03.1992
(51) Int. Cl.: G01V 1/38

(54) **Tension relieving device for a cable**
Entspannvorrichtung für ein Kabel
Dispositif d'atténuation de tension pour un câble

(30) Priority: 14.03.1991 NO 911024
(43) Date of publication of application: 14.10.1992
(73) Proprietor: GECO A.S., 4000 Stavanger (NO)
(72) Inventor: Fredheim, Robert, N-5102 Alversund (NO)
(74) Representative: Robinson, John Stuart

(56) References cited:
- DE-A- 2 941 028
- US-A- 4 641 288
- SOVIET INVENTIONS ILLUSTRATED, El section, week D 26, August 5, 1981 Derwent Publications Ltd., London, GB, S 03

## Description

The invention relates to a tension relieving device for a cable or cable section such as a seismic cable (streamer) which is towed behind a vessel.

When cables, e.g. seismic cables (so-called streamers), are towed in the water behind a seismic vessel, the cables are exposed to tension stresses, which not only exert a strain on the streamer in the longitudinal direction, but which can also cause oblique loading in relation to the streamer's longitudinal direction. Such stresses also occur when the streamer is reeled in on a cable reel on board the seismic vessel. If measures are not taken to compensate for such tension stresses, a break can easily occur in the cable and the cable's contacts can become deformed, giving rise to points of leakage in the cable. The load-carrying structures with their wires can even be broken or worn away.

In order to counteract such faults and undesirable effects, tension relieving devices are normally inserted in the seismic cable. A device of this kind is described in US Patent 4 641 288 where between two end elements is attached a band which due to its flexibility should be able to absorb loads, even in directions other than in the cable's longitudinal direction. However, the tension relieving device in accordance with the US patent will not work in all planes, due in part to the termination in the ends where metal pins are used. There will be no compensation for an oblique load in the same direction as the axis of the pins. Moreover, with the device in accordance with the US patent, problems will be encountered with lead-through of the various wiring components required by the streamer cable.

DE 2941028 A1 discloses a streamer cable having a flexible casing enclosing a flexible pipe containing hydrophones. The flexible pipe is held approximately co-axial with the casing by spacer elements. Spacers at the ends of the cable have rims which attach to tension elements which run the length of the cable. The spacers also have passages to allow electrical cables to pass through the spacers.

According to a first aspect of the invention, there is provided a tension relieving device as defined in the appended Claim 1.

Preferred embodiments of the invention are defined in the other appended claims.

It is thus possible to provide a tension relieving device which overcomes or reduces the disadvantages of the device described in US Patent No.4 641 288 and which moreover provides a means of stress relief which works independently of the angle of loading. It is also possible to provide a device which, in the case of a break, prevents the streamer cable or elements of this from becoming completely disconnected.

Such a device is particularly suitable for installation after the so-called "lead-in" section of a towed cable and especially where a streamer is deployed so as to be spaced in a lateral direction in relation to the towing vessel's longitudinal axis, i.e. where there are "breakpoints" in the towing cable. Such a device can also be installed with advantage in several sections behind one another in a streamer cable in order to give it sufficient flexibility.

The stretch element may comprise a rope of a plastics material such as nylon rope or other types of plastic such as polyamide, polyester, and kevlar.

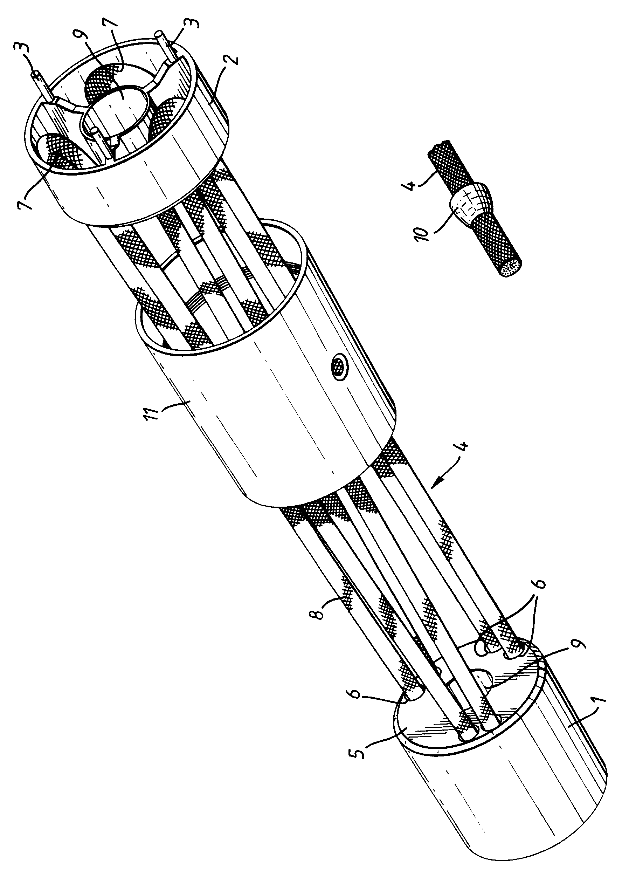

The invention will be further described, by way of example, with reference to the accompanying drawing, which shows in a perspective view a tension relieving device constituting an embodiment of the invention.

The tension relieving device comprises two end pieces 1 and 2 which can be screwed or welded to a streamer plug and are equipped with pins 3 to prevent rotation between the end piece and the plug. The device is designed for the insertion of a tension relieving device in a towed cable, e.g. at the transition from a so-called "lead-in" section which comes from a seismic towing vessel to a streamer cable which follows the tension relieving device. When several streamers are towed in parallel, most of the streamers will be pulled out to the side by means of suitable guiding devices, so that in this area there is a breakpoint in the towline and thus oblique loads are exerted on the towline. Such oblique loads are intended to be absorbed by the tension relieving device and distributed in such a way that the loads follow the direction of the towline. Further tension relieving devices of this kind can be installed at regular intervals along the streamer cables in order to compensate for any loads and to absorb tension stresses at the joints.

Between the two end pieces 1, 2 there is passed a stretch element 4 which can be a nylon rope of strong quality which can hold a pull/stretch load of the order of 10 tons (10160 kilograms). The rope or stretch element 4 is passed in an endless path back and forward between the end pieces 1 and 2. In the end pieces there is installed a plate element 5 with lead-through holes indicated by 6, as illustrated in the figure in connection with the end piece 1. The holes 6 are arranged in pairs. Between the holes in each pair, on the side facing away from the respective other end piece, is placed a curved guide path designed to lead the rope 4 with an even curvature from the one hole 6 of the pair to the other. In this way an endless rope can be passed back and forward between the end pieces 1 and 2, since the ropes inside the end pieces form a curve 7 and run backwards and forwards in lengths indicated at 8. In the illustrated embodiment, six such lengths 8 are shown arranged in three pairs which are symmetrically distributed around a central opening 9 in the end pieces. Wires and other streamer cable equipment can then be led through this opening or central hole 9 without coming into conflict with the tension relieving element.

The symmetrical positioning of the stretch elements or lengths 8 means that the loads, regardless of from which oblique direction they are exerted, will be absorbed equally. Further due to the endless construction of the rope 4, the tension stress which comes in obliquely from one direction will be equally distributed between all the stretch elements, thus giving an even distribution of the load.

In the event of a break in the stretch element 4, there will be a risk of loosing the streamer cable or parts of it. In order to avoid this danger, sone of the lengths have been fitted with a thickening 10 which can be designed in an appropriate manner either by clamping on a clip or by an integrated modelling of the rope part. Each thickening, which can be indicated as a stopper 10, has a diameter greater than the holes 6 in the end pieces. In the event of a break in a length 8, the stretch element will therefore only slide out until the bodies of the stoppers meets the edges of the holes 6. The stopper 10 is illustrated in a detailed sketch in the drawing.

In another embodiment, the safety device can be formed as a separate element, i.e. as an intermediate sleeve 11 as illustrated in the drawing. Inside the intermediate sleeve are installed one or more plate elements with holes which have the same dimensions as the holes 6 and through which the lengths 8 are passed in such a way that the stoppers 10 will press against the plate element, or between several such plate elements, thus ensuring minimum extension of the stretch element 4. The first mentioned embodiment, however, is the preferred one.

Various modifications may be made within the scope of the invention. For instance, only two loops may be used instead of three as shown in the drawing, although three loops have been found to be most expedient for reasons of symmetry. It may also be possible to use more than three loops in cases where the tension stresses can be excessive. The rope in the stretch element may be of a plastics material such as nylon, polyamide, polyester or kevlar, but steel cable may also be used.

## Claims

1. A tension relieving device for a cable or cable section, comprising first and second end pieces (1, 2) for connection in line with the cable or cable section and a stretch element looped between the end pieces, characterised in that the stretch element (4) forms at least two loops defining at least four lengths (8) between the first and second end pieces (1, 2), the loops passing through holes (6) in the first and second end pieces (1, 2), at least some of the lengths (8) being provided with enlargements (10) which are incapable of passing through the holes (6) in the first and second end pieces (1, 2).

2. A device as claimed in Claim 1, characterised in that the stretch element (4) forms three loops defining six lengths (8).

3. A device as claimed in Claim 1 or 2, characterised in that the stretch element (4) is a rope of a plastics material.

4. A device as claimed in Claim 3, characterised in that the element (4) is an endless rope.

5. A device as claimed in any one of the preceding claims, characterized in that each of the end pieces (1, 2) has curved guides for guiding the stretch element between holes (6) in the end pieces and a centrally disposed opening (9) for the passage of cable wires.

## Patentansprüche

1. Zugentlastungsvorrichtung für ein Kabel oder einen Kabelabschnitt, die ein erstes und ein zweites Endstück (1, 2) zum Befestigen längs des Kabels oder Kabelabschnitts, und ein zwischen den Endstücken schleifenförmig angebrachtes Dehnungselement aufweist, dadurch gekennzeichnet, daß das Dehnungselement (4) mindestens zwei Schleifen bildet, die mindestens vier Längen (8) zwischen dem ersten und dem zweiten Endstück (1, 2) definieren, wobei die Schleifen durch Löcher (6) in dem ersten und dem zweiten Endstück (1, 2) hindurchgeführt sind, und mindestens einige der Längen (8) mit Verbreiterungen (10) versehen sind, die nicht durch die Löcher (6) in dem ersten und dem zweiten Endstück (1, 2) hindurchgeführt werden können.

2. Vorrichtung gemäß Anspruch 1, dadurch gekennzeichnet, daß das Dehnungselement (4) drei Schleifen bildet, die sechs Längen (8) definieren.

3. Vorrichtung gemäß Anspruch 1 oder 2, dadurch gekennzeichnet, daß das Dehnungselement (4) ein Seil aus einem Kunststoffmaterial ist.

4. Vorrichtung gemäß Anspruch 3, dadurch gekennzeichnet, daß das Dehnungselement (4) ein endloses Seil ist.

5. Vorrichtung gemäß irgendeinem der vorhergehenden Ansprüche, dadurch gekennzeichnet, daß jedes der Endstücke (1, 2) gekrümmte Führungen zum Führen des Dehnungselementes zwischen den Löchern (6) in den Endstücken, und eine zentral angeordnete Öffnung (9) zum Durchführen der Kabeldrähte aufweist.

## Revendications

1. Dispositif de soulagement de tension pour câble ou section de câble, comprenant des première et deuxième parties d'extrémité (1, 2) destinées à être reliées en alignement avec le câble ou la section de câble, et un élément extensible bouclé entre les parties d'extrémité, caractérisé en ce que l'élément extensible (4) forme au moins deux boucles définissant au moins quatre longueurs (8) entre les première et deuxième parties d'extrémité (1, 2), les boucles traversant des trous (6) dans les première et deuxième parties d'extrémité (1, 2), au moins certaines des longueurs (8) étant munies d'agrandissements incapables de traverser les trous (6) dans les première et deuxième parties d'extrémité (1, 2).

2. Dispositif selon la revendication 1, caractérisé en ce que l'élément extensible (4) forme trois boucles définissant six longueurs (8).

3. Dispositif selon la revendication 1 ou la revendication 2, caractérisé en ce que l'élément extensible (4) est une corde en matière plastique.

4. Dispositif selon la revendication 3, caractérisé en ce que l'élément (4) est une corde sans fin.

5. Dispositif selon l'une quelconque des revendications précédentes, caractérisé en ce que chacune des parties d'extrémité (1, 2) dispose de dispositifs de guidage recourbés destinés à guider l'élément extensible entre les trous (6) des parties d'extrémité, et d'une ouverture (9) disposée de façon centrale pour le passage de câbles.
